(19) Europäisches Patentamt
European Patent Office
Office européen des brevets

(11) **EP 1 573 834 B1**

(12) **FASCICULE DE BREVET EUROPEEN**

(45) Date de publication et mention
de la délivrance du brevet:
**15.04.2009 Bulletin 2009/16**

(21) Numéro de dépôt: **03775013.0**

(22) Date de dépôt: **13.11.2003**

(51) Int Cl.:
***H01M 4/04*** *(2006.01)*

(86) Numéro de dépôt international:
**PCT/CA2003/001739**

(87) Numéro de publication internationale:
**WO 2004/045007 (27.05.2004 Gazette 2004/22)**

(54) **CATHODE RECOUVERTE D'UN FILM COMPRENANT LE LiFePO4 ET UN LIANT SOLUBLE DANS L'EAU, SON PROCEDE DE FABRICATION ET SISTEME ELECTROCHIMIQUE**

MIT EINEM LiFePO4 UND WASSERLÖSLICHEN BINDEMITTEL ENTHALTENDEN FILM BESCHICHTETE KATHODE, HERSTELLUNGSVERFAHREN DAFÜR UND ELEKTROCHEMISCHES SYSTEM

CATHODE COATED WITH A FILM COMPRISING LiFePO4 AND A WATER-SOLUBLE BINDER, PRODUCTION METHOD THEREOF AND ELECTROCHEMICAL SYSTEM

(84) Etats contractants désignés:
**AT BE BG CH CY CZ DE DK EE ES FI FR GB GR HU IE IT LI LU MC NL PT RO SE SI SK TR**

(30) Priorité: **13.11.2002 CA 2411695**

(43) Date de publication de la demande:
**14.09.2005 Bulletin 2005/37**

(73) Titulaire: **HYDRO-QUEBEC
Montréal
Québec H2Z 1A4 (CA)**

(72) Inventeurs:
• **ZAGHIB, Karim
Longueuil, Québec J4M 2M7 (CA)**
• **ARMAND, Michel
38410 Saint-Martin d'Uriage (FR)**

• **GUERFI, Abdelbast
Brossard, Québec J4Z 1W2 (CA)**
• **PERRIER, Michel
Montréal, Québec H1T 3H8 (CA)**
• **DUPUIS, Elisabeth
Ste-Angèle-de-Monnoir, J0L 1P0 (CA)**
• **CHAREST, Patrick
Sainte-Julie, Québec J3E 1P2 (CA)**

(74) Mandataire: **Sueur, Yvette
Cabinet SUEUR et L'HELGOUALCH,
109, boulevard Haussmann
75008 Paris (FR)**

(56) Documents cités:
**EP-A- 0 573 266        EP-A- 1 172 878**

**Description**

## DOMAINE DE L'INVENTION

La présente invention est relative à un nouveau procédé de préparation d'électrodes électrochimiques et aux électrodes ainsi obtenues. Le procédé permet la préparation d'électrodes recouvertes en partie ou en totalité par un film obtenu par épandage et séchage, sur l'électrode, d'une solution aqueuse comportant un liant soluble dans l'eau et un matériau actif.
Un deuxième aspect de l'invention concerne les procédés de préparation de systèmes électrochimiques mettant en oeuvre au moins une étape de préparation des électrodes selon l'invention et les systèmes électrochimiques ainsi obtenus.
Un deuxième aspect de la présente invention est relatif à l'utilisation d'un polymère soluble dans l'eau, comme liant dans une solution aqueuse pour la préparation d'un film pour le recouvrement d'une partie ou de la totalité d'une électrode.
La présente invention met également à disposition un nouveau procédé de fabrication de batterie Li-ion Graphite naturel/électrolyte/LiFePO$_4$, soit tout liquide, tout gel ou solide.

## ART ANTÉRIEUR

Le brevet américain US-A-6.280.882 décrit une composition électrolytique aprotique positionnée dans un séparateur et dans au moins une électrode composite contenant une poudre d'un matériau actif. La composition électrolytique employée comprend une première matrice polymérique constituée par un polymère et au moins une seconde matrice polymérique ainsi qu'au moins un sel alcalin de même qu'un solvant aprotique polaire. Ce procédé présente les inconvénients liés à l'utilisation des liants de type PVDF dilués dans des solvants classés comme toxiques par rapport à l'environnement.

## BRÈVE DESCRIPTION DES DESSINS

**La Figure 1** représente de façon schématique un procédé selon un mode de réalisation de l'invention pour la préparation de batteries lithium ions par extrusion.
**La Figure 2** représente en coupe elliptique des éléments d'une batterie lithium ion selon l'invention.
**La Figure 3** représente une structure bi-cellules pour les cellules polymères.
**La Figure 4** représente schématiquement une enveloppe métal plastique sans couche de protection de HF pour les batteries non polymère.
**La Figure 5** représente la courbe charge-décharge d'une anode Graphite/Celgard (EC-DMC-LiBF$_4$)Li préparé avec un liant soluble dans l'eau.
La Figure 6 représente la courbe de charge - décharge de la cathode LiFePO$_4$/Celgard (EC-PC-DMC-LiBF4) Li préparé avec un liant soluble dans l'eau.

## RÉSUMÉ DE L'INVENTION

L'invention est relative à un procédé de préparation d'une électrode recouverte au moins partiellement par un film obtenu par épandage et séchage, sur un support d'électrode, d'une solution aqueuse comprenant au moins un matériau actif, au moins un liant soluble dans l'eau et au moins un épaississant soluble dans l'eau. Le procédé outre ses avantages économiques élimine le problème environnement généré par l'utilisation de solvants organiques. Les électrodes ainsi obtenues sont performantes et sont avantageusement utilisables dans la fabrication de systèmes électrochimiques stables et à hautes performances.

## DESCRIPTION DÉTAILLÉE DE L'INVENTION

Dans le cadre de la présente invention on entend par liant tout composé chimique dont la fonction est de relier les particules actives entre elles afin d'avoir un réseau chimique ou électrochimique favorable à la conduction.
Dans le cadre de la présente invention on entend par épaississant tout composé chimique ayant la capacité d'augmenter la viscosité et la mouillabilité de particules hydrophobes présentes dans les solutions concernées.
**Un premier objet** de la présente invention est constitué par un procédé de préparation d'une Cathode selon la définition de la revendication 1.
L'épandage se fait avantageusement par les techniques traditionnelles décrites notamment dans Coating Technology Handbook by Satas Armek 1991, partie II, Coating and Processing Technics pages 103 à 321. Le séchage du film épandu sur l'électrode se fait avantageusement pendant une durée comprise entre 1 et 2 heures et à une température préférentiellement comprise entre 80 et 130°Celsius.

Le matériau actif utilisé est LiFePO$_4$.

Le matériau chimiquement et/ou électrochimiquement actif utilisé est généralement sous la forme de poudre d'une taille moyenne de grains comprise entre 10 nanomètres et 10 millimètres et d'une dispersion granulométrique relativement faible correspondant avantageusement à un écart D50-D10=30 et à un écart D90-D50=30.

Selon un mode préférentiel, notamment pour la préparation d'électrodes pour des batteries de type automobile, la poudre retenue présente une dispersion granulométrie comprise entre 200 nanomètres et 25 micromètres.

Le liant et l'épaississant retenus sont généralement pour au moins 20 % solubles dans l'eau lorsqu'on les introduits, à température ambiante, à raison de 20 grammes dans 100 grammes d'eau. De préférence, ils sont solubles pour au moins 50 % et plus avantageusement encore pour au moins 90 %.

L'épaississant soluble dans l'eau peut être choisi dans le groupe constitué par les celluloses naturels, les celluloses modifiées physiquement et/ou chimiquement; les polysaccharides naturels, les polysaccharides modifiés chimiquement et/ou physiquement et qui présentent un poids moléculaire compris entre 27.000 et 250.000.

L'épaississant est avantageusement choisi dans le groupe constitué par les carboxyméthylcelluloses, les hydroxyméthylcelluloses et les méthyléthylhydroxycelluloses.

Selon un mode préférentiel, l'épaississant est choisi dans le groupe constitué par les carboxyméthylcelluloses, de type Cellogen®, commercialisées par la Société Dai-ichi Kogyo Seiyaku Co. au Japon notamment sous les appellations commerciales EP, 7A, WSC, BS-H et 3H.

Le liant soluble est avantageusement sélectionné dans le groupe constitué par les caoutchoucs naturels et/ou synthétique.

Le liant est de type non fluoré ou de type faiblement fluoré. En effet à titre d'exemple LiF n'étant pas soluble dans l'eau il ne peut être utilisé dans le contexte de l'invention

Parmi les caoutchoucs ceux de type synthétique et plus particulièrement ceux choisis dans le groupe constitué par les SBR, (Styrène Butadiène Rubber), les NBR (butadiene-acrylonitrile rubber), les HNBR (NBR hydrogénés), les CHR (epichlorhydrines rubber) et les ACM (acrylate rubber) sont particulièrement avantageux.

Les caoutchoucs solubles utilisés, et notamment ceux de la famille du SBR se présentent de préférence sous forme d'une pâte.

On peut citer à titre d'exemple, le SBR commercialisé par la société NIPPON ZEON'S BINDER BATTERY GRADE sous l'appellation commerciale (BM-400B) ou équivalent et les épaississants de type Cellogen® connus sous les abréviations EP et/ou 3H.

Habituellement, le rapport épaississant/liant varie de 10 à 70 %, de préférence de 30 à 50 %.

La teneur en liant est avantageusement comprise entre 1 et 70 %, et celle en épaississant entre 1 et 10 %, dans la solution aqueuse.

Une solution aqueuse adéquatement utilisée pour l'épandage sur un support d'anode peut être formulée comme suit, les pourcentages étant formulés en poids:

- au moins 64 % de graphite; et
- au moins 3 % de liant soluble dans l'eau,
- de 0,1 à 2 % d'épaississant; et
- au plus 27 % d'eau.

Une solution aqueuse adaptée pour l'épandage sur un support de cathode peut être formulée comme suit, la solution aqueuse utilisée pour l'épandage contient en poids:

- au moins 64 % de LiFePO$_4$; et
- au moins 3 % d'un liant soluble dans l'eau ;
- de 0,1 à 2 % d'un épaississant; et
- au plus 27 % d'eau.

Lors de la mise en oeuvre du procédé on assèche l'électrode en éliminant, de préférence, au moins 95 % de l'eau présente dans la solution utilisée pour réaliser l'étape d'épandage.

Diverses techniques connues de la personne de la technique considérée sont utilisables pour éliminer les traces de H$_2$O présentes à la surface de l'électrode, après le recouvrement de cette dernière par la solution aqueuse, sont éliminées par voie thermique en ligne du procédé EXT, DBH et/ou DB ou par Infrarouge à une température avantageusement comprise entre 80 et 130° Celsius pour une durée comprise entre 1 et 12 heures.

On sèche avantageusement le film jusqu'à ce que la teneur en eau résiduelle soit inférieure à 2.000 ppm et de préférence inférieure à 50 ppm.

On applique avantageusement ce procédé aux électrodes de type non salé.

Le procédé est habituellement réalisé à température et à pression ambiantes. Une atmosphère inerte peut être utilisée, ainsi qu'un vide partiel pendant l'étape de séchage. Du fait que l'on n'utilise pas de solvant organiques, le procédé par extrusion revêt une importance particulière. En effet les risques inhérents à l'emploi de solvant, notamment les risque d'explosion sont écartés et l'on peut travailler, par exemple dans le cadre d'une réalisation par extrusion, dans des conditions plus énergétiques, notamment à une vitesse d'extrusion pouvant être jusqu'à 20 % supérieure.

Pour la fabrication d'électrodes négatives le matériau électrochimiquement actif utilisé peut être choisi dans le groupe constitué par les poudres de type graphite, d'alliage de Sn, de Si, de $Li_4Ti_5O_{12}$, de $WO_2$ et des mélanges obtenus à partir d'au moins deux de ces poudres. À titre d'exemple, de telles poudres, on peut citer celles constituées de particules ayant un noyau de graphite ellipsoïdal enrobé par des particules de graphite d'une forme prismatique. L'enrobage du graphite ellipsoïdal par le graphite prismatique peut être obtenu par mécano-fusion et/ou par hybridisation.

Dans l'électrode positive cathode, le matériau électrochimiquement actif est préférentiellement choisi parmi les poudres de $LiFePO_4$ enrobé de graphite et de carbone et les mélanges d'au moins deux de ces dernières.

On obtint ainsi par exemple des électrodes de type $LiFePO_4$ enrobé de graphite et/ou de carbone. L'enrobage du $LiFePO_4$ par le carbone et/ou par le graphite est habituellement assuré par mécano-fusion et/ou par hybridisation.

La surface spécifique du carbone présent dans l'enrobage peut largement varier, celle mesurée par BET, a été identifiée comme étant dans la plupart des cas supérieure ou égale à 50 $m^2$/g.

Ce procédé permet également la préparation d'un séparateur électrochimique recouvert au moins partiellement, par un film de type polymère, de préférence de type SBR soluble dans l'eau.

Un tel procédé de préparation d'un séparateur électrochimique est conforme aux procédés de préparation d'électrodes précédemment définis, à la différence que la solution aqueuse polymérique utilisée ne contient pas de matériaux actifs ni de carbone ou que de très faibles quantités de ces derniers. En effet, le séparateur sert au transport ionique entre l'anode et la cathode, il n'est pas conducteur électroniquement.

**Un deuxième objet** de la présente invention est constituée par une cathode telle que définie dans la revendication 21.

Le support d'électrode de la cathode est avantageusement constitué au moins en partie par du stainless, de l'aluminium, de cuivre, de carbone, du métal-plastique ou par un mélange d'au moins deux de ces matériaux.

Pour une anode, le support d'électrode est avantageusement constitué au moins en partie par du cuivre, du métal-plastique, ou par un mélange de ces derniers.

Les cathodes de l'invention présentent avantageusement au moins une des propriétés suivantes:

- une stabilité au stockage de préférence supérieure à 1 an, en présence d'un taux d'humidité supérieur à 50 % et en présence de températures supérieures à 20° Celsius;
- une épaisseur lorsque le film est à base de graphite qui est de préférence comprise entre 10 et 100$\mu$m, plus préférablement encore comprise entre 20 et 45$\mu$m et selon le mode le plus avantageux le film a une épaisseur d'environ 45$\mu$m;
- une épaisseur comprise entre 20 et 200$\mu$m, plus préférentiellement encore entre 20 et 110$\mu$m, le mode le plus avantageux est celui dans lequel le film a une épaisseur d'environ 90 $\mu$m;
- des performances électrochimiques comparables à celles des électrodes correspondantes obtenues avec le même matériau actif mais en utilisant une solution d'un solvant organique;
- un film d'électrode caractérisé par le fait que des particules de caoutchouc sont directement attachées au support d'électrode; et
- une porosité du film qui recouvre une ou plusieurs des électrodes, mesurée selon la méthode de mesure des épaisseurs, qui est comprise entre 10 et 90 %, de préférence comprise entre 30 et 40 %.

**Un troisième objet** est constitué par un procédé de préparation d'un système électrochimique par assemblage de ses éléments constitutifs comportant au moins une anode, au moins une cathode et au moins un séparateur, dans lequel au moins une cathode a été obtenue par un procédé selon le premier objet de l'invention ou telle que défmie dans le second objet de l'invention.

Ce procédé est avantageusement utilisé pour la préparation d'une batterie dans laquelle le séparateur est poreux. Le séparateur est par exemple de type Polypropylène ou Polyethylène ou de type mélange (PP, PE) et obtenu par extrusion et/ou de type gel.

Le séparateur est préférentiellement obtenu à partir de matériaux polymériques de type:

- polyester;

- poly(vinylydiènefluoride), aussi appelés (PVDF), de formule chimique $(CH_2-CF_2)_n$, avec n variant de préférence entre 1.000 et 4.000, de préférence tels que n est voisin de 150, parmi ces polymères ceux ayant un poids moléculaire moyen compris entre 10.000 et 1 million, plus préférentiellement encore ceux ayant un poids moléculaire moyen compris entre 100.000 et 250.000 sont d'un intérêt particulier;

- les copolymères poly(vinylydiène fluoro-co-hexafluoropropène), de formule $[(CH_2-CF_2)_x(CF_2-CF(CF_3))_{1-x}]_n$ aussi appelés (PVDF-HFP), avec n variant de 1.000 à 4.000, de préférence n varie de 2.000 à 3.000, plus préférentiellement encore avec n voisin de 150 et x varie de préférence entre 0,12 et 0,5, parmi ces polymères ceux ayant un poids moléculaire moyen compris entre 10.000 et 1 million, plus préférentiellement encore ceux ayant un poids moléculaire moyen compris entre 100.000 et 250.000 présentant un intérêt particulier.

- les poly(tetrafluoroethylène), aussi appelés (PTFE), de formule chimique $(CF_2-CF_2)_n$, avec n variant de 5 à 20.000, de préférence avec n variant de 50 à 10.000, parmi ces polymères ceux ayant un poids moléculaire moyen compris entre 500 et 5 millions, plus préférentiellement encore ceux ayant un poids moléculaire moyen compris entre 5.000 et 1.000.000, de préférence d'environ 200.000 sont d'un intérêt particulier.

- les poly(éthylène-co-propylène-co-5-methylène-2-norbornène) ou les copolymères éthylène propylène-diène, aussi appelés EPDM, préférentiellement ceux ayant un poids moléculaire moyen compris entre 10.000 et 250.000, de préférence compris entre 20.000 et 100.000;

- les poly(méthylmétacrylate) aussi appelés (PMMA), de formule $[(CH_2-C(CH_3)/(CO_2CH_3)]_n$, avec n variant de préférence entre 100 et 10.000, plus préférentiellement encore avec n variant de 500 à 5.000, parmi ces polymères ceux ayant un poids moléculaire moyen compris entre 10.000 et 1 million, de préférence ceux ayant un poids moléculaire moyen compris entre 50.000 et 500.000; présentent un intérêt particulier; et

- les mélanges d'au moins deux de ces derniers.

La préparation de ce type de séparateur se fait avantageusement par mise en oeuvre des techniques décrites dans Coating Technology Handbook by Satas Armek 1991, partie II, pages 103 à 321, Coating and Processing Techniques.

À titre d'exemple de séparateurs connus on peut citer ceux de type polyether copolymère PEO-PPO, ceux de type polyether à 3 branches comme défini par exemple dans le brevet US-A-6.190.804 ou ceux de type polymères à 4 branches comme défini dans le brevet US-A-6.280.882. Le contenu de ces deux brevets et, en particulier respectivement les colonnes 1 et 2, est incorporé par référence à la présente demande.

Des résultats particulièrement intéressants on été obtenus par utilisation d'un séparateur obtenu à partir du polyether à 4 branches fabriqué par la société DKS Japon et commercialisé sous la marque ELEXCEL® ERM1.

**Un quatrième objet** de la présente invention est constitué par les systèmes électrochimiques susceptibles d'être obtenus par un procédé selon le troisième objet de la présente invention. ainsi que par ceux comprenant au moins une électrode obtenue par mise en oeuvre d'un procédé selon le premier objet de la présente invention.

Dans de tels systèmes une des originalités réside dans le fait que la solution polymère a séché à la surface du support de l'électrode et qu'il en résulte, par exemple dans le cas de solutions aqueuses de SBR, un attachement du SBR à la surface du support d'électrode.

Dans de tels systèmes, le séparateur peut être de type électrolyte gel, solide ou liquide et il est avantageusement de type gel.

Selon un mode avantageux de réalisation, l'électrolyte comporte au moins un sel et au moins un solvant.

La concentration molaire en sel, dans l'électrolyte, est alors de préférence inférieure ou égale à 1 et la concentration molaire en solvant est quant à elle avantageusement supérieure ou égale à 1.

Le sel utilisé est de préférence un sel de la famille des imides, de type $LiPF_6$, $LiBF_4$, LiBOB, LiTFSI ou LiFSI ou de type leurs mélanges tels que le mélange de LiBOB et de LiFSI.

Les solvants retenus possèdent, de préférence, un point d'ébullition élevé qui est supérieur à 100 °Celcius. On peut ainsi citer à titre de tels solvants ceux de type γBL, TESA, ou TESA modifié, ou les mélanges d'au moins deux de ces derniers.

Les solvants EC (Éthylène carbonate) et PC (Propylène carbonate) sont habituellement utilisés pour la formation du film de passivation dans le cas des anodes à base de carbone, et le solvant PC pour réaliser des applications à basse température.

Dans de tels systèmes, l'électrolyte pour la batterie tout gel est avantageusement obtenue à partir d'un précurseur composé de a) un polymère + b) un électrolyte liquide.

La teneur en a) peut varier de 1 à 99 %, de préférence cette teneur varie de 5 à 25 %; et la teneur en b) peut varier de 1 à 99 %, de préférence cette teneur varie de 75 à 95 % et les teneurs a et b vérifient alors la relation (a) + (b) = 100 %, les % étant exprimés en poids.

Selon un autre mode avantageux de réalisation, le thermo-initiateur est ajouté dans des quantités qui sont proportionnelles au poids total a) + b), soit de préférence à des teneurs comprises 100 et 5.000 ppms, plus préférentiellement encore à des teneurs comprises entre 500 et 1000 ppm.

La composition du polymère est préférentiellement faible soit d'environ 5 % d'un polyether à 4 branches, de préférence de type ELECEL® et d'environ 95 % de l'électrolyte de composition (1.5 LiTFSI + EC + PC + TESA + γBL ( 1 : 1 : 1 : 2)).

La concentration en sel de lithium est quant à elle avantageusement supérieure ou égale à 1 M (1 molaire) pour les gels et la concentration en sel de lithium est inférieure ou égale à 1 M (1 molaire) dans l'électrolyte liquide.

Parmi ces systèmes électrochimiques, on mentionne avantageusement ceux comportant au moins une anode, au moins une cathode et au moins un séparateur et dans lesquels au moins deux, et de préférence au moins trois des éléments constitutifs du système ont été préparés par mise en oeuvre de l'un quelconque des procédés selon le premier objet de l'invention.

De même les systèmes électrochimiques dans lesquels les éléments constitutifs ont été préparés substantiellement, sans utilisation de solvants organiques, sont particulièrement intéressants et ceux obtenus sans aucun solvant organique préférés.

## DESCRIPTION DE MODES PRÉFÉRENTIELS DE RÉALISATION DE L'INVENTION

De façon générale, lors de la mise en oeuvre des procédés selon l'invention, les techniques dites à haute vitesse tel que l'extrusion ou l'épandage vertical sur EXMET peuvent être utilisées, cependant l'extrusion est le procédé recommandé.

Le liant sans fluor est dissout dans l'eau ce qui facilite le procédé d'extrusion et augmente la vitesse des procédés.

La présence du graphite dans l'anode et dans la cathode joue le rôle de lubrifiant et permet, notamment, lors de la mise en oeuvre de l'extrusion, d'homogénéiser l'épaisseur de l'électrode et de diminuer sa résistance en contrôlant la porosité.

Le solvant utilisé, que ce soit dans le cas de l'anode ou dans celui de la cathode est l'eau, ce qui rend le procédé sécuritaire, respectueux de l'environnemental et peu coûteux. L'utilisation d'un sel de type Imide (sans formation de HF) assure la bonne conductivité de l'électrolyte et augmente la sécurité de la batterie.

Le nouveau procédé selon l'invention est applicable notamment à la production de batteries Li-ion peu coûteuses et sécuritaires. De telles batteries comportent au moins les 4 parties suivantes: une anode; une cathode; un séparateur; un électrolyte

## EXEMPLES

Les exemples suivants sont donnés à titre purement illustratif et ne sauraient être interprétés comme constituant une quelconque limitation de l'invention.

### 1. Préparation d'une anode

L'anode est formée de particules sphériques de graphite ayant une taille moyenne de 20 μm, enrobées avec 1 % de particules d'un graphite prismatique d'une taille de 4 μm, le mélange est assuré par Mécano-fusion ou par Hybridisation. Ainsi 95 % de graphite est mélangé à 5 % d'un SBR tel que le (NIPPON ZEON'S BINDER BATTERY GRADE (BM-400B)) qui sert comme liant, ce dernier étant mis en solution dans l'eau.

Une concentration optimum est choisie pour l'extrusion ou l'épandage sur le cuivre (de préférence sur du métal étiré dit EXMET).

Le graphite sphérique est choisi à cause de la rapidité de la diffusion du lithium à sa surface et de sa capacité réversible de l'ordre de 370 mAh/g. Le carbone prismatique est quant à lui choisi comme pont de conductivité entre les particules sphériques, ce qui diminue la résistance de l'électrode, l'autre rôle du graphite prismatique (relié à la présence de surfaces basales) est d'assurer la lubrification de l'électrode, en particulier lors de l'extrusion ou de l'épandage, ce qui a pour effet d'homogénéiser l'épaisseur et la porosité de l'électrode. Le séchage « onLine » par infrarouge simplifié la machinerie et le procédé.

Le chauffage sert aussi à éliminer les traces d'eau ($H_2O$). Le fait que l'électrode ne soit pas salée (pas de sel) permet d'améliorer les performances électrochimiques de la batterie pour sans qu'il y ait formation de HF).

L'autre avantage associé à cette électrode est l'emploi d'un liant non fluoré, ce qui permet d'éliminer toute réaction avec l'électrolyte ou toute réaction parasite avec formation de HF. Ceci influence le choix du matériau multicouches, du métal plastique qui sert comme boîtier de la batterie et permet d'éviter l'emploi d'une couche protectrice contre HF, ceci limite d'autant les coûts de fabrication.

Dans ce procédé, le solvant de départ est l'eau, ceci est bénéfique pour l'environnement et ne demande aucune installation spéciale (comme une chambre anhydre pour la récupération du solvant avec des précautions spéciales).

**2. Utilisation du procédé pour la préparation de la cathode**

La cathode est constituée de LiFeP0$_4$ (origine Phostech Inc.). LiFePO$_4$ est enrobé par 3 % de Noir de Ketjen et par 3 % de graphite naturel ou artificiel. Le procédé d'enrobage est assuré par mécano-fusion ou par hybridisation.
Le noir de Ketjen sert à constituer le réseau de conductivité électronique dans l'électrode. Le graphite joue un double rôle, il assure d'abord un pont de jonction entre le LiFePO$_4$ et le noir Ketjen, ce qui amène une basse résistance de l'électrode. Le graphite assure également un rôle de lubrifiant ce qui facilite l'épandage, en particulier par extrusion, en donnant une bonne uniformité et une porosité contrôlée de l'électrode.
Le composé LiFePO$_4$/carbone (noir de Ketjen)/graphite est mélangé avec 5% de liant SBR; de (NIPPON ZEON'S BINDER BATTERY GRADE(BM-400B)) mis en solution dissous dans l'eau.
L'épandage du composite est assuré par extrusion ou par Doctor Blade (horizontal ou vertical), dé préférence par Extrusion, le séchage est assuré comme dans le cas de la préparation de l'anode décrite dans la partie 1, qui met en oeuvre de l'Infrarouge.
Le procédé mis en oeuvre pour la préparation de la cathode est similaire à celui utilisé pour la préparation de l'anode.
Il nécessite l'utilisation :

- de H$_2$O comme solvant;
- d'un graphite lubrifiant et conducteur;
- d'Infra-Rouge comme moyen de séchage; et
- d'un liant sans fluor de type SBR; (NIPPON ZEON'S BINDER BATTERY GRADE(BM-400B).

Il permet d'éviter l'utilisation:

- d'un sel;
- d'une chambre anhydre; et
- de précautions spéciales.

Le LiFePO$_4$ est complètement chargé à 3,8 Volts, sans pour autant décomposer le SBR de (NIPPON ZEON'S BINDER BATTERY GRADE(BM-400B). L'utilisation du sel de type Imide n'affecte pas la corrosion des collecteurs d'aluminium, de préférence de type EXMET ce qui est avantageux pour la densité d'énergie de la batterie.

**3. Procédé de préparation d'un séparateur**

**a. Séparateur pour Liquide et Gel Électrolyte**

Le séparateur est de préférence de type PP (Poly Propylène) ou PE (Poly Ethylène) ou leur mélange. Il est obtenu de préférence par extrusion. La porosité de ce séparateur est d'environ de 30 à 50 %, ce qui donne plus de place pour l'électrolyte en particulier pour le gel. Cette membrane est appelée « Free Solvent » (Solvant Libre). Le séparateur est réticulé par chauffage thermique UV, E-Beam, ou IR (thermique). La réticulation est réalisée de préférence par IR sur une ligne de protection.

**b. Séparateur Polymère**

L'utilisation de ce séparateur dans la batterie limite encore plus l'utilisation de PP ou de PE. L'avantage de polymère comme séparateur est d'ordre sécuritaire, puisqu'il forme un gel physique et chimique avec l'électrolyte.
Le séparateur est formé de préférence d'un polyether de type co-polymére PEO-PPO (Poly Ethylène-Oxyde-Poly-Propylène Oxyde) de type 3 branches ou 4 branches, de préférence d'un polyether 4 branches (commercialisé par DKS sous l'appellation Elexel® 217). Ces polyethers sont pratiquement liquides à température ambiante. Leur utilisation dans le cadre du procédé d'extrusion ne demande aucun ajout de solvant, ce qui élimine le problème de nuisance à l'environnement.
La réticulation de ce type de polymère est effectuée thermiquement par E-Beam- IR ou UV.

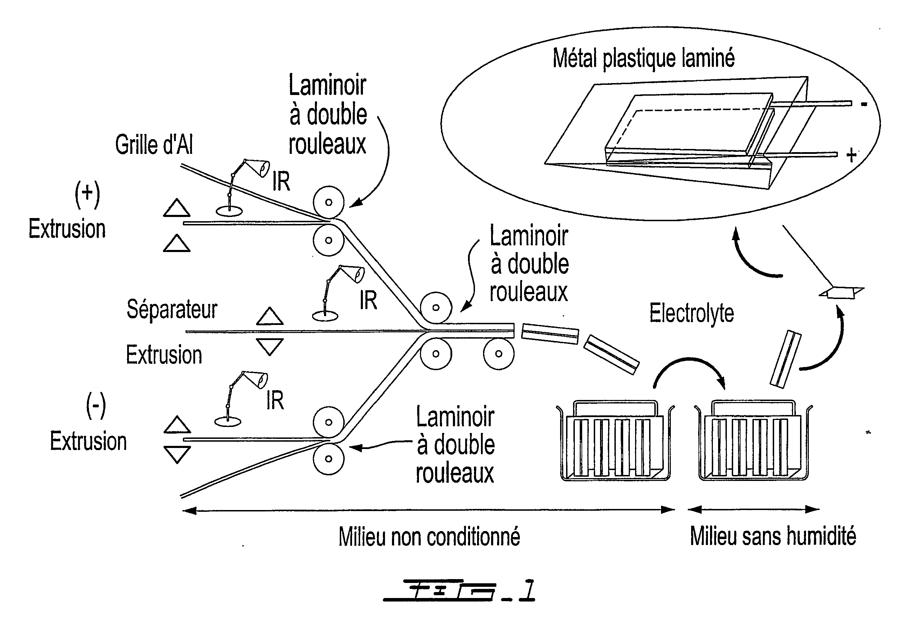

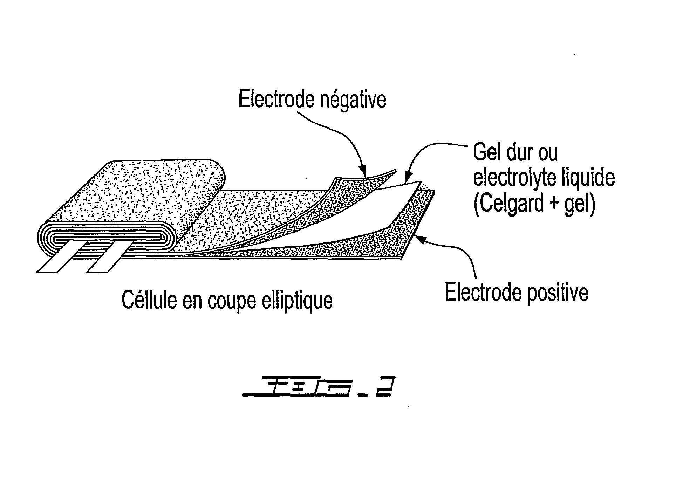

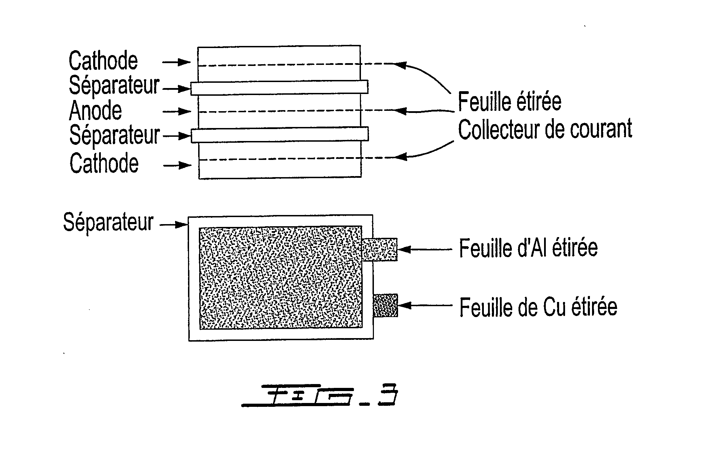

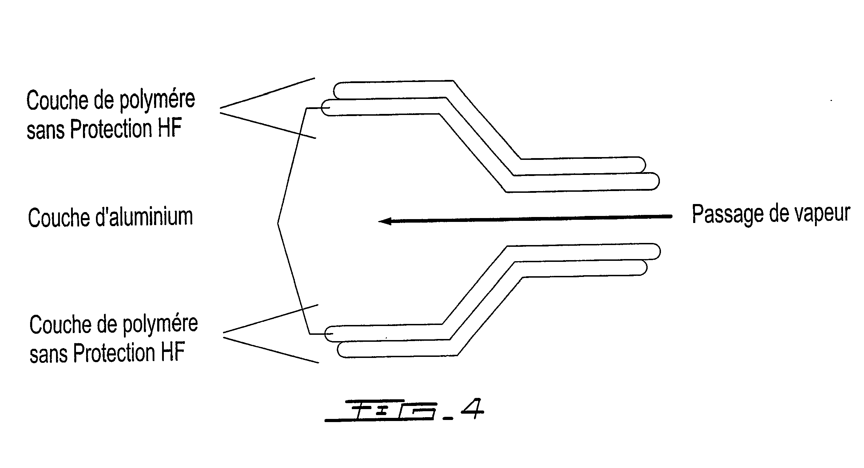

**4. Montage d'une batterie Li-ion (Figs 1-4)**

**a. Tout liquide**

Les 3 films anode/séparateur : PP ou PE/ Cathode sont enroulés ensemble selon la capacité désirée (en mAh ou Ah); lors de l'enroulement, une pression de 10 PSI est appliquée. Les Tabs (connecteur de courant) de type Al et Nickel sont soudés par ultrason (ATM207), respectivement sur le collecteur Al de la cathode et le cuivre de l'anode.
L'enroulement des 3 films est introduit dans une pochette en métal plastique, sans le protecteur de HF.
L'injection de l'électrolyte liquide est réalisée après un vide complet de la pochette métal plastique. L'électrolyte liquide est un mélange de sels et de solvants, le sel est de type Imide comme le LiTFSI et/ou le LiFSI, le solvant ou le mélange de solvant utilisé possède préférablement un haut point d'ébullition. À titre d'exemple de solvants utilisables dans ce contexte, on mentionne les mélanges:

$$EC + \gamma BL$$

$$EC + TESA \text{ (ou TESA modifié)}$$

ou

$$.PC + EC + \gamma BL$$

$$PC + EC + TESA \text{ (ou TESA modifié)}$$

$$PC + EC + \gamma BL + TESA \text{ (ou TESA modifié)}$$

La concentration du sel dans le cas des liquides est $\leq 1$ M (1 molaire). Une fois que la batterie est scellée, la formation électrochimique de la batterie est réalisée par l'application de faibles courants pour obtenir un film de passivation uniforme sur la surface de l'anode (graphite/ellipsoïde).

**b. Gel avec séparateur PP ou PE**

Le procédé de la partie 4b est essentiellement le même que celui décrit dans la partie 4a.
Le précurseur de l'électrolyte gel est composé de 5 % polymère (Excel) + 95 % (1.5 M LiTFSI) + EC + PC + y BL 1 :1 :3) + 1000 PPM d'un thermo-initiateur qui est de préférence le Perkadox 16. Cette combinaison ne limite pas le choix de l'électrolyte.
L'électrolyte est injectée après un vide total de la pochette de la batterie, incluant les 3 films (Anode/séparateur PP/cathode).
Une fois la batterie scellée, le gel est obtenu par traitement thermique à 80 °Celsius, pendant 10 minutes, de préférence par IR pendant 10 minutes. Une mesure d'impédance, in-situ, suit l'évolution de la résistance de l'électrolyte. Après mise en oeuvre de la polymérisation, la batterie est formée électrochimiquement, comme l'équivalent de la partie 4b. La concentration du gel est alors constante dans le séparateur, dans l'anode et dans la cathode.

**c. Gel avec séparateur polyether**

Les 3 films Anode/polyether/cathode sont enroulés ensemble et introduits dans une pochette de type Métal plastic. Le précurseur du gel est de même nature que le précurseur déjà décrit dans la partie 4b). Le précurseur du gel est introduit dans la pochette Métal plastique après un vide complet. La polymérisation est obtenue à 80°Celsius pendant 10 minutes ou de préférence avec IR (infra-rouge) une fois que la batterie est scellée. Une formation comme dans le cas de 4b est appliquée à la batterie. La concentration du gel dans le séparateur et les électrodes est différente.

## 5. Autres technologies

À titre d'exemple, on peut citer quelques anodes de type Si, $Li_4Ti_5O_{12}$ ou d'alliages à base de Sn.

Le gel peut être également de type PVDF ou constitué par un mélange de Polyether + PVPF ou Polyether + PMMA ou autre.

### Exemple 1:

La fabrication de l'anode est réalisée en utilisant un graphite sphérique dont les particules ont une taille moyenne de 20 μm. Ces particules ont été obtenues par Mécano-fusion (Hosoka,wa, Japon). 95 % de graphite est mélangé avec 8 % de STYRENE BUTADIENE RUBBER (STYRENE BUTADIENE RUBBER (SBR)) dissous dans l'eau. Ce mélange est appliqué sur un collecteur de cuivre par la méthode Doctor Blade®. L'électrode ainsi obtenue est séchée sous vide à 120°Celsius pendant 24 heures. Cette électrode est montée face à un lithium métalique et elle est séparée par le film de type Celgard (EC-DMC-LiBF$_4$). Ainsi,une pile électrochimique de 4cm$^2$ de surface est obtenue.

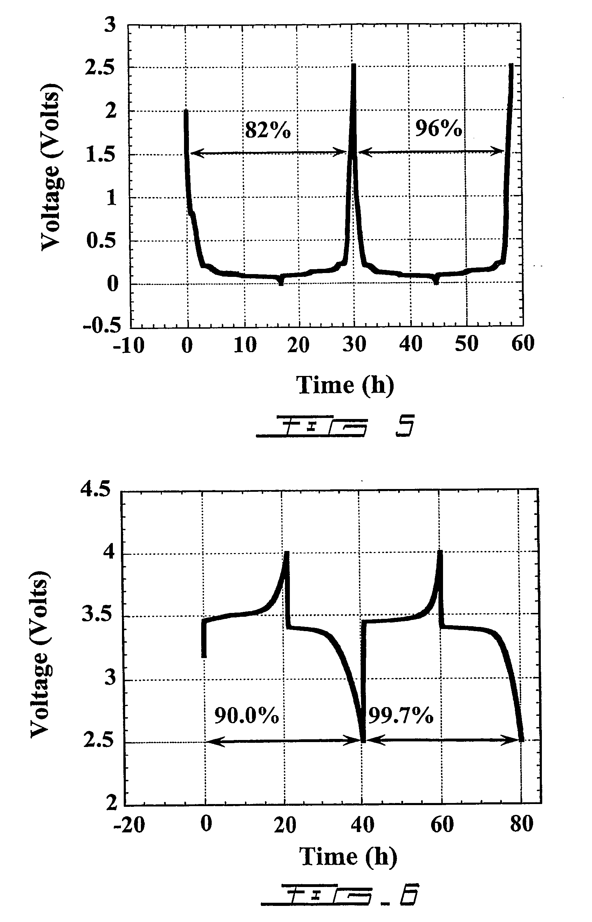

La batterie est cyclée entre 0.0 et 2.5Volts à un régime de C/12. La Figure 5 montre le résultat du deux premiers cycles de la pile avec efficacité coulombique de 82.0% et 96.1% respectivement au premier et au second cycle.

### Exemple 2:

La cathode préparée contient des particules de $LiFePO_4$ (Phostech Inc.) enrobées par 3 % de Noir de Ketjen. Le procédé d'enrobage est assuré par Mécano-fusion (Hosokawa, Japon).

Le composé $LiFePO_4$/carbone (noir de Ketjen) est mélangé avec 5 % STYRENE BUTADIENE RUBBER (STYRENE BUTADIENE RUBBER (SBR)) dissous dans l'eau. Ce mélange est appliqué sur un collecteur d'aluminium par la méthode Doctor Blade™. L'électrode ainsi obtenue est séchée sous vide à 120°Celsius pendant 24 heures. L'électrode ainsi obtenue est séchée sous vide à 120°C pendant 24 heures. Cette électrode est montée face à un lithium métalique et séparée par un film de type Celgard (EC-PC-DMC- LiBF$_4$). Ainsi, une pile électrochimique de 4 cm$^2$ de surface est obtenue.

La batterie est cyclée entre 2,5 et 4,0Volts à un régime de C/24. La Figure 6 montre le résultat électrochimique du deux premiers cycles de la pile avec une efficacité coulombique de 90,0% et 99,7% respectivement au premier et au second cycle.

### Revendications

**1.** Procédé de préparation d'une électrode destinée à être utilisée comme cathode consistant à appliquer sur un substrat conducteur destiné à former le collecteur de courant de l'électrode, une solution comprenant un matériau actif, un liant et au moins un épaississant, **caractérisé en ce que** le matériau actif est $LiFePO_4$, le solvant de la solution est l'eau, le liant est un matériau non fluoré ou faiblement fluoré soluble dans l'eau et l'épaississant est soluble dans l'eau.

**2.** Procédé selon la revendication 1, **caractérisé en ce que** le matériau actif est sous forme de poudre d'une taille moyenne de grains comprise entre 10 nm et 50 μm.

**3.** Procédé selon la revendication 2, **caractérisé en ce que** la poudre à une dispersion granulométrique comprise entre 200 nm et 25 μm.

**4.** Procédé selon la revendication 1, **caractérisé en ce que** le liant et/ou l'épaississant sont pour au moins 20 % soluble dans l'eau à raison de 20 g dans 100 g d'eau, à température ambiante.

**5.** Procédé selon la revendication 4, **caractérisé en ce que** le liant et/ou l'épaississant sont solubles pour au moins 50 %.

**6.** Procédé selon la revendication 5, **caractérisé en ce que** le liant et/ou l'épaississant sont solubles pour au moins 90 %.

**7.** Procédé selon la revendication 1, **caractérisé en ce que** l'épaississant soluble dans l'eau est choisi parmi les celluloses naturelles, les celluloses modifiées, les polysaccharides naturels et les polysaccharides modifiés.

**8.** Procédé selon la revendication 1, **caractérisé en ce que** l'épaississant soluble présente un poids moléculaire compris entre 27.000 et 250.000.

**9.** Procédé selon la revendication 7 ou 8, **caractérisé en ce que** l'épaississant est choisi parmi les carboxyméthylcelluloses, les hydroxyméthylcelluloses et les méthyléthylhydroxycelluloses.

**10.** Procédé selon la revendication 1, **caractérisé en ce que** le liant est un caoutchouc naturel ou synthétique.

**11.** Procédé selon la revendication 1, **caractérisé en ce que** le liant est de type non fluoré ou de type faiblement fluoré.

**12.** Procédé selon la revendication 10 ou 11, **caractérisé en ce que** le caoutchouc est choisi parmi les SBR, les NBR, les HNBR, les CHR et les ACM.

**13.** Procédé selon la revendication 10 ou 11, **caractérisé en ce que** le caoutchouc est un SBR sous forme d'une pâte à température ambiante.

**14.** Procédé selon la revendication 1, **caractérisé en ce que** la teneur en liant dans la solution est comprise entre **1** et 70%, la teneur en épaississant est comprise entre 1 et 10%, et le rapport épaississant/liant est de 10 à 70%.

**15.** Procédé selon la revendication 1, **caractérisé en ce que** la solution destinée à être appliquée sur le substrat conducteur a le composition en poids suivante :

- au moins 64 % de $LiFePO_4$; et
- au moins 3 % d'un liant soluble dans l'eau ;
- de 0,1 à 2 % d'un épaississant; et
- au plus 27 % d'eau.

**16.** Procédé selon l'une quelconque des revendications 1 à 15, dans lequel au moins 95 % de l'eau présente dans la solution d'épandage est évaporée après épandage.

**17.** Procédé selon l'une quelconque des revendications 1 à 16, **caractérisé en ce qu'**il est mis en oeuvre à l'air ambiant et en utilisant la méthode d'extrusion, la méthode du Docteur Blade et/ou une méthode électrostatique.

**18.** Procédé selon la revendication 1, **caractérisé en ce que** le matériau actif est constitué par des particules de $LiFePO_4$ enrobées de particules de graphite et/ou de carbone.

**19.** Procédé selon la revendication 18, dans lequel la surface spécifique du carbone présent dans l'enrobage, mesurée par BET, est $\geq 50$ m$^2$/g.

**20.** Procédé selon la revendication 18 ou 19, dans lequel l'enrobage du $LiFePO_4$ par le carbone et/ou le graphite est assuré par mécano-fusion ou par hybridation.

**21.** Electrode obtenue par mise en oeuvre d'un procédé selon l'une quelconque des revendications 1 à 20, comprenant un collecteur de courant revêtu d'un film constitué par un matériau actif, un liant et au moins un épaississant, ledit matériau actif comprenant le $LiFePO_4$, le liant étant un matériau non fluoré ou faiblement fluoré soluble dans l'eau et l'épaississant étant soluble dans l'eau.

**22.** Électrode selon la revendication 21, dans laquelle le collecteur est constitué au moins en partie par du stainless, de l'aluminium, du carbone, du métal-plastique ou par un mélange d'au moins deux de ces matériaux.

**23.** Electrode selon la revendication 21, **caractérisé en ce que** l'épaisseur du film de mat- une épaisseur du film de matériau actif est comprise entre 20 et 200 $\mu$m

**24.** Electrode selon la revendication 21, **caractérisée en ce que** le liant est un caoutchouc dont les particules sont directement attachées au collecteur.

**25.** Électrode selon la revendication 21, dans lequel la porosité du film qui recouvre le collecteur, mesurée selon la méthode de mesure des épaisseurs, est comprise entre 10 et 90 %.

**26.** Système électrochimique comportant au moins une anode, au moins une cathode et au moins un séparateur, **caractérisé en ce que** la ou les cathodes sont des électrodes selon l'une des revendications 21 à 25.

**27.** Système électrochimique selon la revendication 26, dans lequel l'anode est une électrode obtenu par un procédé consistant à appliquer sur un substrat conducteur destiné à former le collecteur de courant de l'électrode, une solution comprenant un matériau actif d'anode, un liant et au moins un épaississant, le solvant de la solution étant l'eau, le liant étant un matériau non fluoré ou faiblement fluoré soluble dans l'eau et l'épaississant étant soluble dans l'eau.

**28.** Système électrochimique selon la revendication 27, dans lequel le matériau actif de l'anode est choisi parmi les poudres de type graphite, d'alliage de Sn, de Si, de $Li_4Ti_5O_{12}$, de $WO_2$ et des mélanges d'au moins deux de ces composants.

**29.** Système électrochimique selon la revendication 27, dans lequel l'anode est obtenu par épandage d'une solution aqueuse qui contient, en poids :

- au moins 64 % de graphite; et
- au moins 3 % de liant soluble dans l'eau,
- de 0,1 à 2 % d'épaississant; et
- au plus 27 % d'eau.

**30.** Système électrochimique selon la revendication 29, dans lequel la poudre de graphite est constituée par des particules de forme ellipsoïdal enrobées par des particules de graphite de forme prismatique.

**31.** Système électrochimique selon la revendication 26 constituant une batterie, **caractérisé en ce que** le séparateur est un séparateur poreux.

**32.** Système électrochimique selon la revendication 27, **caractérisé en ce que** le séparateur est de type PP ou PE ou de type mélange (PP, PE).

**33.** Système électrochimique selon la revendication 26, **caractérisé en ce que** le séparateur est de type électrolyte gel, électrolyte solide ou électrolyte liquide.

**34.** Système électrochimique selon la revendication 33 de type batterie liquide, dans lequel l'électrolyte comporte au moins un sel et au moins un solvant.

**35.** Système électrochimique selon la revendication 34, dans lequel l'électrolyte à une concentration molaire en sel inférieure ou égale à 1 et une concentration molaire en solvant supérieure ou égale à 1.

**36.** Système électrochimique selon la revendication 34, dans lequel le sel est choisi parmi $LiPF_6$, $LiBF_4$, LiBOB, LiTFSI ou LiFSI ou les mélange d'au moins deux d'entre eux.

**37.** Système électrochimique selon l'une quelconque des revendication 21 à 23, dans lequel les solvant a un point d'ébullition supérieur à 100 °C.

**38.** Système électrochimique selon la revendication 37, **caractérisé en ce que** le solvant est choisi parmi $\gamma$- BL, TESA, ou TESA modifié, et leur mélanges.

**39.** Système électrochimique selon la revendication 33, **caractérisé en ce que** l'électrolyte est un électrolyte gel obtenu à partir d'un polymère a) et d'un électrolyte liquide b).

**40.** Système électrochimique selon la revendication 39, dans lequel la teneur en poids en a) varie de 1 à 99 %, et la teneur en poids en b) varie de 1 à 99 %, et les teneurs en a) et en b) sont telles que (a) + (b) = 100 %.

**Claims**

**1.** Process for preparing an electrode for use as a cathode, consisting in applying on a conductive substrate which is to form the current collector of the electrode, a solution comprising an active material, a binder and at least a thickening agent, **characterized in that** the active material is $LiFePO_4$, the solvent of the solution is water, the binder is a non fluorinated or low fluorinated water soluble material and the thickening agent is water soluble.

**2.** Process according to claim 1, **characterized in that** the active material is in the form of powder whose average particle size is between 10 nm and 50 $\mu$m.

**3.** Process according to claim 2, **characterized in that** the powder has a granular dispersion between 200 nm and 25 $\mu$m.

**4.** Process according to claim 1, **characterized in that** at least 20% of the binder and/or thickening agent are water soluble at the rate of 20 g in 100 g of water, at room temperature.

**5.** Process according to claim 4, **characterized in that** at least 50% of the binder and/or thickening agent are soluble.

**6.** Process according to claim 5, **characterized in that** at least 90% of the binder and/or thickening agent are soluble.

**7.** Process according to claim 1, **characterized in that** the water soluble thickening agent is selected from natural celluloses, modified celluloses, natural polysaccharides and modified polysaccharides.

**8.** Process according to claim 7, **characterized in that** the soluble thickening agent has a molecular weight between 27,000 and 250,000.

**9.** Process according to claim 7 or 8, **characterized in that** the thickening agent is selected from carboxymethylcelluloses, hydroxymethylcelluloses and methylethylhydroxycelluloses.

**10.** Process according to claim 1, **characterized in that** the binder is a natural or synthetic rubber.

**11.** Process according to claim 1, **characterized in that** the binder is non fluorinated or low fluorinated.

**12.** Process according to claim 10 or 11, **characterized in that** the rubber is SBR, NBR, HNBR, CHR or ACM.

**13.** Process according to claim 10 or 11, **characterized in that** the rubber is a SBR **characterized in** the form of a paste at room temperature.

**14.** Process according to claim 1, **characterized in that** the binder content in the solution est between 1 and 70%, the thickening agent content is between 1 and 10%, and the ratio thickening agent/binder is from 10 to 70%.

**15.** Process according to claim 1, **characterized in that** the solution to be applied on the conducting substrate has the following weight composition :

  - at least 64% $LiFePO_4$ ;
  - at least 3% water soluble binder;
  - from 0,1 to 2% thickening agent; and
  - not more than 27% water.

**16.** Process according to any of claims 1-15, **characterized in that** at least 95% of the water that is present in the spreading solution is evaporated after spreading.

**17.** Process according to any of claim 1 to 16, **characterized in that** it is carried out in ambient air and by extrusion, by the Doctor Blade method and/or by the electrostatic method.

**18.** Process according to claim 1, **characterized in that** the active material consists in $LiFePO_4$ particles coated with graphite and/or carbon particles.

**19.** Process according to claim 18, **characterized in that** the specific surface area of the carbon present in the coating, measured by BET, is $\geq 50$ m$^2$/g.

**20.** Process according to claim 18 or 19, **characterized in that** coating of $LiFePO_4$ with carbon and/or graphite is carried out by mechano-melting or by hybridization.

**21.** Electrode obtained by the process of any of claims 1 to 20, comprising a current collector coated with a film consisting of an active material, a binder and at least one thickening agent, wherein said active material comprises LiFePO$_4$, the binder is a non fluorinated or low fluorinated water soluble material and the thickening agent is water soluble.

22. Electrode according to claim 21, **characterized in that** the current collector consists at least in part of stainless, aluminum, copper, carbon, metal-plastic or a mixture of at least two of these materials.

23. Electrode according to claim 21, **characterized in that** the film of active material has a thickness between 20 and 200 $\mu$m.

24. Electrode according to claim 21, **characterized in that** the binder is made of particles of rubber which are directly attached to the collector.

25. Electrode according to claim 21, **characterized in that** the porosity of the film that coats the collector, measured according to the method of thickness measurement, is between 10 and 90%.

26. Electrochemical system comprising an anode, at least one cathode et at least one separator, **characterized in that** the cathode(s) are electrodes according to any of claims 21 to 25.

27. Electrochemical system according to claim 26, wherein the anode is an electrode obtained by the process consisting in applying on a conductive substrate which is to form the current collector of the electrode, a solution comprising an active anode material, a binder and at least one thickening agent, wherein the solvent of the solution is water, the binder is a non fluorinated or low fluorinated water soluble material and the thickening agent is water soluble.

28. Electrochemical system according to claim 27, in which the active material of the anode is selected from powders of graphite, Sn alloy, Si, Li$_4$Ti$_5$O$_{12}$, WO$_2$ and mixtures of at least two of these components.

29. Electrochemical system according to claim 27, in which the anode is obtained by spreading an aqueous solution which contains, by weight:

    - at least 64% LiFePO$_4$ ;
    - at least 3% water soluble binder;
    - from 0,1 to 2% thickening agent; and
    - not more than 27% water.

30. Electrochemical system according to claim 29, in which the graphite powder consists of ellipsoidal shaped particles coated with prismatic shaped graphite particles.

31. Electrochemical system according to claim 26 forming a battery, **characterized in that** the separator is poreux.

32. Electrochemical system according to claim 27, **characterized in that** the separator is of the PP or PE type or of the (PP,PE) mixture type.

33. Electrochemical system according to claim 26, **characterized in that** the separator is of the gel electrolyte, solid electrolyte or liquid electrolyte type.

34. Electrochemical system according to claim 33 forming a liquid battery, wherein the electrolyte includes at least one salt and at least one solvent.

35. Electrochemical system according to claim 34, **characterized in that** the salt molar concentration, in the electrolyte, is lower than or equal to 1 and the solvent molar concentration is higher than or equal to 1.

36. Electrochemical system according to claim 34, in which the salt is preferably a salt of the imide family, of the type LiPF$_6$, LiBF$_4$, LiBOB, LiTFSI or LiFSI or a mixture of at least two of the latter, such as mixtures of LiBOB and LiFSI.

37. Electrochemical system according to any of claims 21 to 23, in which the solvent has a boiling point higher than 100°C.

38. Electrochemical system according to claim 37, **characterized in that** the solvent is selected from $\gamma$-BL, TESA, or modified TESA, or mixtures thereof.

39. Electrochemical system according to claim 33, **characterized in that** the electrolyte is a gel electrolyte obtained from a polymer a) and a liquid electrolyte b).

40. Electrochemical system according to claim 39, in which the a) content varies from 1 to 99%, and the b) content varies from 1 to 99%, and the a and b contents agree with the relation (a)+(b)=100%, the % being given in weight.


**Patentansprüche**

1. Verfahren zur Herstellung einer Elektrode, die zur Verwendung als Kathode geeignet ist, wobei das Verfahren darin besteht, eine Lösung, die ein aktives Material, ein Bindemittel und zumindest ein Verdickungsmittel enthält, auf ein leitfähiges Substrat aufzutragen, das den Stromabnehmer der Elektrode ausbildet, **dadurch gekennzeichnet, dass** das aktive Material $LiFePO_4$ ist, das Lösungsmittel der Lösung Wasser ist, das Bindemittel ein nicht fluorhältiges oder gering fluorhältiges, wasserlösliches Material ist und das Verdickungsmittel wasserlöslich ist.

2. Verfahren nach Anspruch 1, **dadurch gekennzeichnet, dass** das aktive Material in Form eines Pulvers mit einer mittleren Korngröße zwischen 10 nm und 50 $\mu$m vorliegt.

3. Verfahren nach Anspruch 2, **dadurch gekennzeichnet, dass** das Pulver eine Korngrößenverteilung zwischen 200 nm und 25 $\mu$m aufweist.

4. Verfahren nach Anspruch 1, **dadurch gekennzeichnet, dass** das Bindemittel und/oder das Verdickungsmittel bei Raumtemperatur zumindest zu 20 %, in einer Menge von 20 g in 100 g Wasser, in Wasser löslich ist.

5. Verfahren nach Anspruch 4, **dadurch gekennzeichnet, dass** das Bindemittel und/oder das Verdickungsmittel zu zumindest 50 % löslich sind.

6. Verfahren nach Anspruch 5, **dadurch gekennzeichnet, dass** das Bindemittel und/oder das Verdickungsmittel zu zumindest 90 % löslich sind.

7. Verfahren nach Anspruch 1, **dadurch gekennzeichnet, dass** das wasserlösliche Verdickungsmittel aus natürlichen Cellulosen, modifizierten Cellulosen, natürlichen Polysacchariden und modifizierten Polysacchariden ausgewählt ist.

8. Verfahren nach Anspruch 1, **dadurch gekennzeichnet, dass** das lösliche Verdickungsmittel ein Molekulargewicht zwischen 27.000 und 250.000 aufweist.

9. Verfahren nach Anspruch 7 oder 8, **dadurch gekennzeichnet, dass** das Verdickungsmittel aus Carboxymethylcellulosen, Hydroxymethylcellulosen und Methylethylhydroxycellulosen ausgewählt ist.

10. Verfahren nach Anspruch 1, **dadurch gekennzeichnet, dass** das Bindemittel ein natürlicher oder synthetischer Kautschuk ist.

11. Verfahren nach Anspruch 1, **dadurch gekennzeichnet, dass** das Bindemittel nicht fluorhältig oder gering fluorhältig ist.

12. Verfahren nach Anspruch 10 oder 11, **dadurch gekennzeichnet, dass** der Kautschuk aus SBR, NBR, HNBR, CHR und ACM ausgewählt ist.

13. Verfahren nach Anspruch 10 oder 11, **dadurch gekennzeichnet, dass** der Kautschuk SBR in Form einer Paste bei Raumtemperatur ist.

14. Verfahren nach Anspruch 1, **dadurch gekennzeichnet, dass** der Bindemittelgehalt in der Lösung zwischen 1 und 70 %, der Verdickungsmittelgehalt zwischen 1 und 10 % und das Verhältnis Verdickungsmittel/Bindemittel 10 bis 70 % beträgt.

15. Verfahren nach Anspruch 1, **dadurch gekennzeichnet, dass** die Lösung, die zum Auftragen auf das leitfähige Substrat dient, folgende Gewichtszusammensetzung aufweist:

- zumindest 64 % LiFePO$_4$; und
- zumindest 3 % eines wasserlöslichen Bindemittels;
- 0,1 bis 2 % eines Verdickungsmittels; und
- maximal 27 % Wasser.

16. Verfahren nach einem der Ansprüche 1 bis 15, worin zumindest 95 % des in der Beschichtungslösung vorhandenen Wassers nach dem Beschichten verdampft ist.

17. Verfahren nach einem der Ansprüche 1 bis 16, **dadurch gekennzeichnet, dass** es unter Umgebungsluft und unter Einsatz eines Extrusionsverfahrens, eines Rakelverfahrens und/oder eines elektrostatischen Verfahrens durchgeführt wird.

18. Verfahren nach Anspruch 1, **dadurch gekennzeichnet, dass** das aktive Material aus LiFePO$_4$-Teilch besteht, die mit Graphit- und/oder Kohlenstoffpartikeln beschichtet sind.

19. Verfahren nach Anspruch 18, worin die spezifische Oberfläche des in der Beschichtung vorhandenen Kohlenstoffs, gemäß BET gemessen, $\geq 50$ m$^2$/g beträgt.

20. Verfahren nach Anspruch 18 oder 19, worin die Beschichtung von LiFePO$_4$ durch Kohlenstoff und/oder Graphit durch Mechanofusion oder Hybridisierung erfolgt.

21. Elektrode, die durch die Durchführung eines Verfahrens nach einem der Ansprüche 1 bis 20 erhalten wird, umfassend einen mit einem aus einem aktiven Material, einem Bindemittel und zumindest einem Verdickungsmittel bestehenden Film beschichteten Stromabnehmer, wobei das aktive Material LiFePO$_4$ umfasst, das Bindemittel ein nicht fluorhältiges oder gering fluorhältiges wasserlösliches Material ist und das Verdickungsmittel wasserlöslich ist.

22. Elektrode nach Anspruch 21, worin der Abnehmer zumindest teilweise aus Edelstahl, Aluminium, Kohlenstoff, Metall-Kunststoff oder einem Gemisch von zumindest zwei dieser Materialien besteht.

23. Elektrode nach Anspruch 21, **dadurch gekennzeichnet, dass** die Filmdicke des aktiven Materials zwischen 20 und 200 $\mu$m liegt.

24. Elektrode nach Anspruch 21, **dadurch gekennzeichnet, dass** das Bindemittel ein Kautschuk ist, dessen Teilchen direkt an den Abnehmer gebunden sind.

25. Elektrode nach Anspruch 21, worin die Porosität des Films, der den Abnehmer bedeckt, durch ein Dichtemessungsverfahren gemessen, zwischen 10 und 90 % liegt.

26. Elektrochemisches System, umfassend zumindest eine Anode, zumindest eine Kathode und zumindest einen Separator, **dadurch gekennzeichnet, dass** die Kathode(n) (eine) Elektrode(n) nach einem der Ansprüche 21 bis 25 ist/sind.

27. Elektrochemisches System nach Anspruch 26, worin die Anode eine Elektrode ist, die durch ein Verfahren erhalten wird, das darin besteht, eine Lösung, die ein aktives Anodenmaterial, ein Bindemittel und zumindest ein Verdickungsmittel enthält, auf ein leitfähiges Substrat aufzutragen, das den Stromabnehmer der Elektrode ausbildet, wobei das Lösungsmittel der Lösung Wasser ist, das Bindemittel ein nicht fluorhältiges oder gering fluorhältiges, wasserlösliches Material ist und das Verdickungsmittel wasserlöslich ist.

28. Elektrochemisches System nach Anspruch 27, worin das aktive Material der Anode aus Pulvern vom Graphittyp, aus einer Sn-Legierung, aus Si, aus L$_{14}$Ti$_5$O$_{12}$, aus WO$_2$ und aus Gemischen zumindest zwei dieser Komponenten ausgewählt ist.

29. Elektrochemisches System nach Anspruch 27, worin die Anode durch das Aufbringen einer wässrigen Lösung erhalten wird, die Folgendes enthält:

- zumindest 64 Gew.-% Graphit; und
- zumindest 3 Gew.-% wasserlösliches Bindemittel;
- 0,1 bis 2 Gew.-% Verdickungsmittel; und

- maximal 27 Gew.-% Wasser.

**30.** Elektrochemisches System nach Anspruch 29, worin das Graphitpulver aus ellipsenförmigen Partikeln besteht, die mit prismenförmigen Graphitpartikeln beschichtet sind.

**31.** Elektrochemisches System nach Anspruch 26, das eine Batterie bildet, **dadurch gekennzeichnet, dass** der Separator ein poröser Separator ist.

**32.** Elektrochemisches System nach Anspruch 27, **dadurch gekennzeichnet, dass** der Separator vom PP- oder PE- oder Mischtyp (PP,PE) ist.

**33.** Elektrochemisches System nach Anspruch 26, **dadurch gekennzeichnet, dass** der Separator ein gelförmiger Elektrolyt, ein fester Elektrolyt oder ein flüssiger Elektrolyt ist.

**34.** Elektrochemisches System nach Anspruch 33 vom Flüssigbatterietyp, worin der Elektrolyt zumindest ein Salz und zumindest ein Lösungsmittel umfasst.

**35.** Elektrochemisches System nach Anspruch 34, worin der Elektrolyt eine Salzmolkonzentration von 1 oder weniger und eine Lösungsmittelmolkonzentration von 1 oder mehr aufweist.

**36.** Elektrochemisches System nach Anspruch 34, worin das Salz aus $LiPF_6$, $LiBF_4$, LiBOB, LiTFSI oder LiFSI oder Gemischen von zumindest zwei davon ausgewählt ist.

**37.** Elektrochemisches System nach einem der Ansprüche 21 bis 23, worin das Lösungsmittel einen Siedepunkt von mehr als 100 °C aufweist.

**38.** Elektrochemisches System nach Anspruch 37, **dadurch gekennzeichnet, dass** das Lösungsmittel aus $\gamma$-BL, TESA oder modifiziertem TESA und Gemischen davon ausgewählt ist.

**39.** Elektrochemisches System nach Anspruch 33, **dadurch gekennzeichnet, dass** der Elektrolyt ein gelförmiger Elektrolyt ist, der ausgehend von einem Polymer a) und einem flüssigen Elektrolyt b) erhalten wird.

**40.** Elektrochemisches System nach Anspruch 39, worin der Gehalt an Gewicht von a) zwischen 1 und 99 Gew.-% und der Gehalt an Gewicht von b) zwischen 1 und 99 Gew.-% und der Gehalt von a) und der Gehalt von b) so ausgewählt sind, dass (a) + (b) = 100 % ist.

Métal plastique laminé

Grille d'Al

Laminoir à double rouleaux

(+) Extrusion

IR

Séparateur

Extrusion

Laminoir à double rouleaux

IR

(-) Extrusion

IR

Laminoir à double rouleaux

Electrolyte

Milieu non conditionné

Milieu sans humidité

FIG.1

Electrode négative

Gel dur ou
electrolyte liquide
(Celgard + gel)

Céllule en coupe elliptique

Electrode positive

FIG. 2

FIG. 3

Passage de vapeur

Couche de polymére sans Protection HF

Couche d'aluminium

Couche de polymére sans Protection HF

FIG. 4

FIG. 5

FIG. 6

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

• US 6280882 A

• US 6190804 A

**Littérature non-brevet citée dans la description**

• Coating and Processing Technics. **SATAS ARMEK.** Coating Technology Handbook. 1991, 103-321

• Coating and Processing Techniques. **SATAS ARMEK.** Coating Technology Handbook. 1991, 103-321